# FASCICULE DE BREVET EUROPEEN

(11) **EP 2 611 628 B1**
(45) Date de publication et mention de la délivrance du brevet: **06.04.2016**
(21) Numéro de dépôt: 11740936.7
(22) Date de dépôt: 09.08.2011
(51) Int. Cl.: B60C 1/00, C08L 1/00, C08L 1/10, C08L 1/12, C08L 1/14, C08L 101/00, C08L 53/00, C08L 53/02

(54) **BANDAGE PNEUMATIQUE AVEC UNE BANDE DE ROULEMENT COMPORTANT UN MATERIAU DE REMPLISSAGE DEGRADABLE**
FAHRZEUGLUFTREIFEN MIT REIFENLAUFLÄCHE DIE ABBAUBAREN FÜLLSTOFF BEINHALTET
PNEUMATIQUE TIRE WITH TREAD COMPRISING DEGRADABLE FILLING MATERIAL

(30) Priorité: 02.09.2010 FR 1056959
(43) Date de publication de la demande: 10.07.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); CUSTODERO, Emmanuel, F-63040 Clermont-Ferrand Cedex 9 (FR)
(74) Mandataire: Dequire, Philippe Jean-Marie Denis
(86) Numéro de dépôt international: PCT/EP2011/063665
(87) Numéro de publication internationale: WO 2012/028429

(56) Documents cités:
- US-A1- 2007 074 797
- ARISIA VIEIRA, REGINA C. R. NUNES, LEILA L. Y. VISCONTI: "Mechanical properties of NR/BR/cellulose II composites", POLYMER BULLETIN, vol. 36, 1 juin 1996 (1996-06-01), pages 759-766, XP002626817,
- VALÉRIA GONCALVES COSTA AND REGINA CÉLIA REIS NUNES: "Mechanical properties of blends of EPDM with NR-Cellulose II System", EUROPEAN POLYMER JOURNAL, vol. 30, 1 septembre 1994 (1994-09-01), pages 1025-1028, XP002626818,
- NUNES R C R ET AL: "Influence of cellulose as a filler in vulcanized rubber composites", POLYMER COMPOSITES, JOHN WILEY & SONS, HOBOKEN, NJ, US, vol. 16, no. 5, 1 octobre 1995 (1995-10-01), pages 421-423, XP009145613, ISSN: 0272-8397, DOI: DOI:10.1002/PC.750160511

## Description

### Domaine de l'invention

La présente invention est relative aux bandages pneumatiques, et plus particulièrement à une bande de roulement d'un bandage pneumatique adaptée pour présenter une sculpture différente lorsque le bandage pneumatique est usé.

### Etat de la technique

De manière connue, la bande de roulement d'un bandage pneumatique, qu'il soit destiné à équiper un véhicule de tourisme ou un véhicule poids lourd, est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un bandage pneumatique est neuf, la bande de roulement a sa hauteur maximale. Cette hauteur initiale peut varier en fonction du type de bandage pneumatique considéré ainsi que de l'usage auquel il est destiné ; à titre d'exemple, les bandages pneumatiques « hiver » ont généralement une profondeur de sculpture supérieure à celle de bandage pneumatiques « été ». Lorsque le bandage pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du bandage pneumatique, comme le comportement ou l'adhérence sur sol mouillé. De plus, les capacités d'évacuation d'eau diminuent fortement lorsque la profondeur des canaux des sculptures diminue.

Il est donc souhaitable de mieux maintenir les performances d'un bandage pneumatique avec l'usure de sa bande de roulement.

Le document US 7,581,575 B2 propose, dans le but de maintenir les propriétés d'usage des bandages pneumatiques lors de leur usure, un bandage pneumatique avec une bande de roulement comprenant un matériau de remplissage dégradable placé dans une cavité, dans lequel le matériau de remplissage est un matériau hydrolysable à base de cellulose. Ce document indique que lorsque la cavité remplie du matériau de remplissage hydrolysable devient exposée au contact avec le sol par l'usure de la bande de roulement du bandage pneumatique, le matériau de remplissage se disloque et est évacué de la cavité qui renforce ainsi les canaux de la sculpture.

Les Demanderesses ont toutefois constaté qu'au cours du roulage normal d'un tel bandage pneumatique avec une bande de roulement comprenant un matériau de remplissage disposé dans une cavité interne, le matériau de remplissage peut se dégrader très vite, bien avant son exposition à l'usure due au contact direct avec un sol de roulage.

### Description brève de l'invention

L'invention a pour objet un bandage pneumatique avec une bande de roulement comprenant un matériau de remplissage dégradable placé dans une cavité, caractérisé en ce que le matériau de remplissage comporte un mélange d'un matériau thermoplastique dégradable à base d'au moins un ester de cellulose choisi dans le groupe des acétates, des butyrates, des acétobutyrates, des propionates et des acétopropionates et d'un élastomère thermoplastique insaturé.

Le matériau de remplissage comportant un tel mélange a l'avantage de présenter une stabilité renforcée lors du roulage du bandage pneumatique neuf et partiellement usé, du fait de l'adhésion entre le matériau de remplissage et la paroi adjacente de la bande de roulement.

De préférence, le matériau thermoplastique étant en proportion A et l'élastomère thermoplastique insaturé étant en proportion B, le rapport B/A varie de 0,1 à 1 ; A et B étant exprimés en masse. Très préférentiellement, le rapport B/A varie de 0,25 à 0,75.

Avantageusement, l'élastomère thermoplastique insaturé est un élastomère thermoplastique styrénique.

Avantageusement, le matériau thermoplastique dégradable est à base d'acétate de cellulose.

Préférentiellement, le matériau thermoplastique dégradable est constitué d'un mélange d'acétate de cellulose et d'acétate de glycérol.

Avantageusement, l'élastomère thermoplastique styrénique insaturé est un copolymère comportant des blocs styrène et des blocs diène.

Selon un mode de réalisation préférentiel, la cavité où est placé le matériau de remplissage est disposée radialement intérieurement relativement à une partie usable de la bande de roulement.

Dans ce mode de réalisation, la cavité où est placé le matériau de remplissage est interne à la bande de roulement et ne devient exposée à l'usure qu'au-delà d'un seuil d'usure donné. On constate alors que le matériau de remplissage selon l'un des objets de l'invention se disloque progressivement et est ainsi évacué de la cavité de la bande de roulement. Cela permet à la sculpture du bandage pneumatique et notamment aux canaux d'évacuation de cette sculpture d'être renforcés par la cavité. Cela permet au bandage pneumatique de conserver ses performances notamment en capacité d'évacuation d'eau, d'adhérence et de comportement sur sol mouillé.

Selon un mode de réalisation, la cavité forme un sillon circonférentiel, lequel peut être par exemple, un sillon droit.

Avantageusement, la cavité n'est exposée que lorsque le taux d'usure de la bande de roulement est supérieur à 50 %, et de préférence compris entre 80 et 95 %. En effet, ce n'est que lorsque l'usure de la bande de roulement devient très forte, au-delà de 80 % que l'on constate une dégradation significative des performances du pneumatique.

L'invention a aussi pour objet une composition thermoplastique comportant un mélange d'un matériau thermoplastique dégradable à base de cellulose et d'un élastomère thermoplastique styrénique insaturé.

De préférence, la composition est telle que le matériau thermoplastique dégradable est à base d'acétate de cellulose et l'élastomère thermoplastique styrénique insaturé est époxydé.

L'invention concerne particulièrement les bandages pneumatiques destinés à équiper des véhicules à moteur de type tourisme, SUV (*"Sport Utility Vehicles"*), deux roues (notamment motos), avions, comme des véhicules industriels choisis parmi camionnettes, «Poids-lourd» - c'est-à-dire métro, bus, engins de transport routier (camions, tracteurs, remorques), véhicules hors-la-route tels qu'engins agricoles ou de génie civil -, autres véhicules de transport ou de manutention.

### Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### Matériau de remplissage dégradable

Le bandage pneumatique selon l'invention a pour caractéristique de comporter une bande de roulement avec un matériau de remplissage dégradable placé dans une cavité, et est tel que le matériau de remplissage comporte un mélange d'un matériau thermoplastique dégradable à base de cellulose et d'un élastomère thermoplastique insaturé.

Le matériau de remplissage comportant un tel mélange a l'avantage de présenter une stabilité renforcée lors du roulage du bandage pneumatique neuf et partiellement usé, notamment du fait de l'adhésion entre le matériau de remplissage et la paroi adjacente de la bande de roulement du bandage pneumatique.

De préférence, le matériau thermoplastique étant en proportion A et l'élastomère thermoplastique styrénique étant en proportion B, le rapport B/A varie de 0,1 à 1 ; A et B étant exprimés en masse. Très préférentiellement, le rapport B/A varie de 0,25 à 0,75.

### Matériau thermoplastique dégradable à base de cellulose

Par matériau thermoplastique dégradable à base de cellulose, on entend toute formulation à base d'esters de cellulose : par exemple, les acétates de cellulose, butyrates de cellulose, acétobutyrates de cellulose, propionates de cellulose, acétopropionates de cellulose.

Le matériau thermoplastique dégradable à base de cellulose est avantageusement à base d'acétate de cellulose.

Il peut être constitué d'un mélange d'acétate de cellulose et d'acétate de glycérol.

Un exemple d'un tel matériau est le «Biograde C9550 » commercialisé par la société FKUR.

### Elastomère thermoplastique insaturé

De manière connue, les élastomères thermoplastiques (en abrégé "TPE") se présentent sous la forme de copolymères blocs. De structure intermédiaire entre polymères thermoplastiques et élastomères, ils sont constitués de séquences rigides thermoplastiques reliées par des séquences souples élastomère, par exemple polybutadiène, polyisoprène ou poly(éthylène/butylène).

C'est la raison pour laquelle, de manière connue, les copolymères TPE se caractérisent généralement par la présence de deux pics de transition vitreuse, le premier pic (température la plus basse, négative) étant relatif à la séquence élastomère du copolymère TPE, le second pic (température la plus haute, positive, typiquement aux alentours de 80°C ou plus) étant relatif à la partie thermoplastique (blocs styrène ou autres) du copolymère TPE.

Les TPE, comme tous les matériaux thermoplastiques, peuvent être mis en oeuvre dans un outil d'extrusion lorsqu'ils sont portés à une température supérieure à leur température de fusion ou de ramollissement. La température de fusion d'un matériau thermoplastique semi-cristallin est déterminée par analyse calorimétrique différentielle (DSC) selon la norme ISO 11357.

On rappelle que le point ou la température de ramollissement (en anglais "*softening point*") est la température à laquelle le matériau, par exemple sous forme de poudre, s'agglutine. Le point ou la température de ramollissement d'un matériau thermoplastique est mesuré selon la norme ISO 4625 (méthode "*ring and ball*").

De préférence, les élastomères thermoplastiques sont des élastomères thermoplastiques styréniques (en abrégé « TPS »). Les séquences rigides des TPS sont ainsi à base de polymères styréniques.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p-*méthylstyrène, *tert*-butylstyrène) les chlorostyrènes (par exemple monochlorostyrène, dichlorostyrène).

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Ceci étant rappelé, une première caractéristique essentielle de l'élastomère TPS utilisé pour fabriquer le matériau de remplissage est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

De préférence, l'élastomère insaturé est un copolymère comportant des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères. L'élastomère thermoplastique insaturé peut aussi avantageusement être porteur de groupes fonctionnels choisis parmi les groupes époxyde, carboxyle, anhydride et ester d'acide.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Des élastomères TPS insaturés à blocs styrène et blocs diène ont par exemple été décrits dans les demandes de brevet WO 2008/080557, WO 2008/145276, WO 2008/145277, qui concernent des compositions étanches à l'air ou auto-obturantes destinées notamment à des bandages pneumatiques.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part du matériau de remplissage, d'autre part du matériau caoutchouteux diénique qui constitue les parois de la cavité et est ainsi adjacent au matériau de remplissage. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000. La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Des élastomères TPS insaturés et époxydés, tels que par exemple SBS, sont connus et disponibles commercialement, par exemple auprès de la société Daicel sous la dénomination "Epofriend".

La Tg des polymères thermoplastiques ci-dessus est mesurée de manière connue par DSC (*Differential Scanning Calorimetry*), par exemple et sauf indications différentes spécifiées dans la présente demande, selon la norme ASTM D3418 de 1999.

### Additifs divers

Les formulations à base d'esters de cellulose peuvent comporter des plastifiants de différentes natures : de manière non exhaustive, on peut citer le triéthyle citrate, l'acétyl triéthyl citrate, le diéthyl citrate, le diéthyl phtalate, la triacétine, l'éthyle lactate, le méthyl lactate, l'huile de ricin.

Ces formulations peuvent également comporter des charges de différents types : carbonate de calcium, dioxyde de titane, silice, craie... mais également d'autres types d'additifs du type retardants au feu, absorbants UV, stabilisants...

### Utilisation du matériau de remplissage dégradable dans un bandage pneumatique

Le matériau de remplissage précédemment décrit est utilisable pour être disposé dans toute cavité de bande de roulement de bandages pneumatiques pour véhicule automobile tel qu'un véhicule de type deux roues, tourisme ou industriel.

### Description des Figures

Les figures annexées illustrent une machine de réalisation d'une bande de roulement avec matériau de remplissage incorporé ainsi que de telles bandes de roulement.
- les figures 1 et 2 sont deux vues respectivement en perspective et en coupe verticale transversale d'un nez d'une machine de réalisation d'une bande de roulement avec matériau de remplissage ;
- les figures 3 à 4 sont deux vues respectivement en perspective et de face de la lame de la machine de la figure 1;
- la figure 5 est une vue en section de la bande de roulement obtenue par le passage sous la lame de la figure 3;
- la figure 6 est une vue analogue à la figure 1 montrant l'implantation de la lame de la figure 3 sur la machine ;
- les figures 7 et 8 sont deux vues analogues à la figure 5 montrant sur deux bandes de roulement de bandages pneumatiques différents les joncs introduits dans les sillons ;
- la figure 9 est une vue analogue à la figure 6 montrant les organes de guidage des joncs dans les sillons sur la machine ;
- la figure 10 est une vue en élévation de la partie de la machine illustrée à la figure 9 ;
- les figures 11 et 12 sont des vues analogues aux figures 7 et 8 montrant la section de la bande de roulement lorsque les sillons sont refermés ;
- la figure 13 est une vue analogue à la figure 9 montrant les organes de comblement de la machine de la figure 1 ;
- la figure 14 est une vue en perspective de l'un de ces organes ; et
- la figure 15 est une vue en coupe transversale de la bande de roulement du bandage pneumatique fabriquée au moyen de la machine.

### Exemples de réalisation de l'invention

### Fabrication du matériau de remplissage dégradable

La fabrication du matériau de remplissage dégradable est avantageusement réalisée au moyen d'un outil d'extrusion, préférentiellement avec une extrudeuse bi-vis. Une telle extrudeuse permet d'obtenir à la fois la fusion des constituants thermoplastiques de la composition et leur malaxage intime.

On considère T_{M1}, la température de fusion ou de ramollissement donnée de l'élastomère thermoplastique styrénique insaturé et T_{M2} la température de fusion ou de ramollissement donnée du matériau thermoplastique.

Le procédé de fabrication comporte les étapes suivantes :
- introduire l'élastomère thermoplastique et le matériau thermoplastique à base de cellulose dans la ou les alimentations de l'extrudeuse bi-vis ;
- faire fondre et malaxer les constituants en portant l'ensemble à une température de malaxage (T_{M}) supérieure aux deux températures de fusion ou de ramollissement données (T_{M1}, T_{M2}) pendant le transfert dans le corps de l'extrudeuse bi-vis ; et
- distribuer la composition résultante à la sortie de l'extrudeuse bi-vis avec une filière de section adaptée.

Le corps de l'extrudeuse bi-vis est porté à une température T_{M} supérieure aux deux températures de fusion ou de ramollissement des composants thermoplastiques de la composition. Cela permet d'assurer, pendant le transfert des constituants dans le corps de l'extrudeuse, à la fois la fusion des deux constituants thermoplastiques et leur malaxage. L'écart de température doit être supérieur à 5°C pour que la fusion soit complète et est de préférence supérieur à 10°C.

A la sortie de l'extrudeuse bi-vis, on peut installer une filière de section adaptée pour l'usage prévu du matériau de remplissage. Par exemple une filière de section cylindrique correspondant au diamètre d'un jonc à introduire dans une cavité circonférentielle droite de bande de roulement d'un bandage pneumatique.

A la sortie de la filière, comme bien connu par un homme du métier, le jonc peut traverser un conformateur, lequel permet une meilleure maîtrise de la géométrie en étant tiré par un tireur à bande par exemple. Il peut ensuite être stocké, par exemple, sous forme de bobine.

On peut aussi, en sortie de la filière refroidir le jonc de sortie par, à titre d'exemple, extrusion dans un liquide puis découper le jonc en granulés. Les granulés peuvent être stockés avant d'être repris dans une second outil d'extrusion pour leur mise en forme finale avant incorporation dans un bandage pneumatique.

L'élastomère thermoplastique styrénique insaturé et le matériau thermoplastique peuvent être introduits en même temps dans le corps de l'extrudeuse au moyen d'une même alimentation.

On peut aussi introduire en même temps ou ultérieurement les autres additifs optionnels du matériau de remplissage.

### Fabrication d'une bande de roulement avec matériau de remplissage

Selon un premier mode de réalisation connu en soi, on réalise une bande de roulement avec matériau de remplissage incorporé dans une ou plusieurs cavités par co-extrusion. On extrude donc conjointement les joncs de matériau de remplissage et la bande de roulement dans laquelle ils sont noyés.

Selon un second mode de réalisation :
- on extrude une bande de gomme ;
- on forme au moins un sillon dans la bande ;
- on fournit au moins un jonc à partir d'une bobine ; et
- on insère le jonc dans le ou chaque sillon.

Les joncs sont réalisés comme précédemment indiqué en préalable à la formation de la bande de gomme et séparément de cette dernière. Il suffit alors de les disposer dans le sillon et de refermer ce dernier. On enfouit donc les joncs dans la gomme suite à sa mise en forme. Ce procédé limite la quantité de rebuts pour défaut de fabrication en raison du fait qu'il permet de s'affranchir des étapes de stabilisation du procédé au lancement de chaque série de fabrication.

De préférence, pour chaque section de la bande, on extrude la section et on forme le sillon dans la section simultanément.

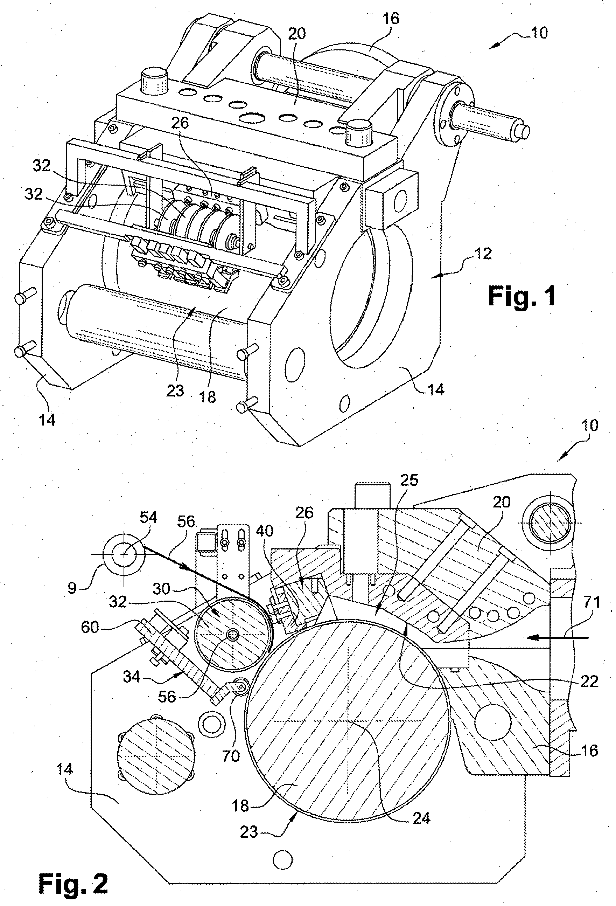

Nous allons décrire, en référence aux figures 1 à 14, un mode de réalisation d'une machine qui est, en l'espèce, une machine d'extrusion servant à la réalisation d'une bande de roulement pour la fabrication d'une ébauche crue de bandage pneumatique de véhicule.

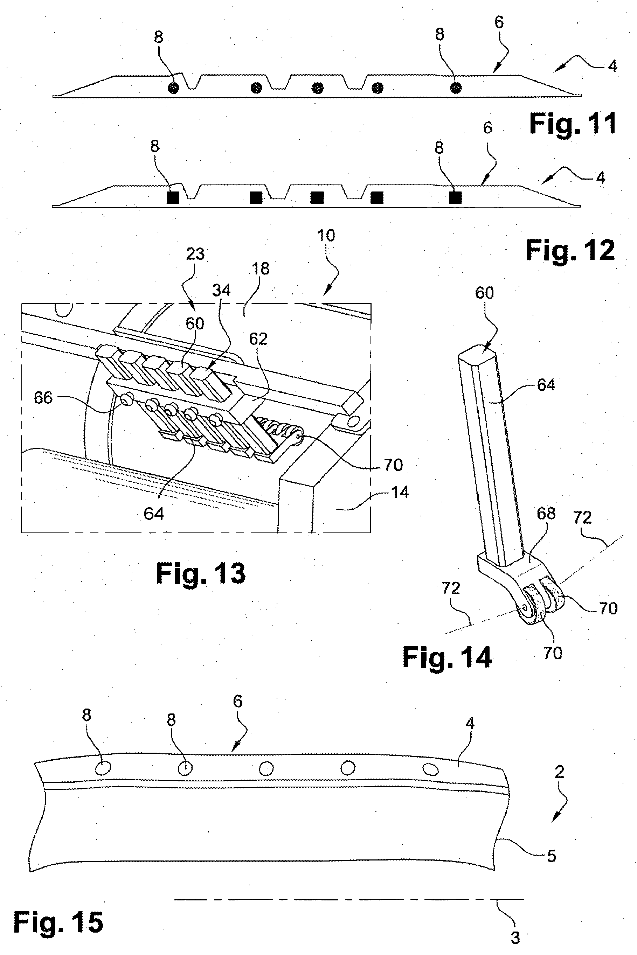

On a illustré à la figure 15 une portion d'une coupe d'un bandage pneumatique résultant de cette fabrication après vulcanisation de l'ébauche, la coupe étant prise dans un plan radial par référence à un axe 3 du bandage pneumatique. La bande de roulement ou bande 4 s'étend en périphérie du bandage pneumatique entre les flancs de ce dernier et sur sa carcasse 5, en périphérie de cette dernière. La bande 4 présente une face périphérique externe 6 formant la surface par laquelle le bandage pneumatique sera en contact avec le sol. Cette face a une forme générale cylindrique à section circulaire.

La bande 4 comprend un corps principal formé de gomme, laquelle comprend de façon classique un mélange d'élastomères naturel et synthétique ainsi que différents produits et adjuvants.

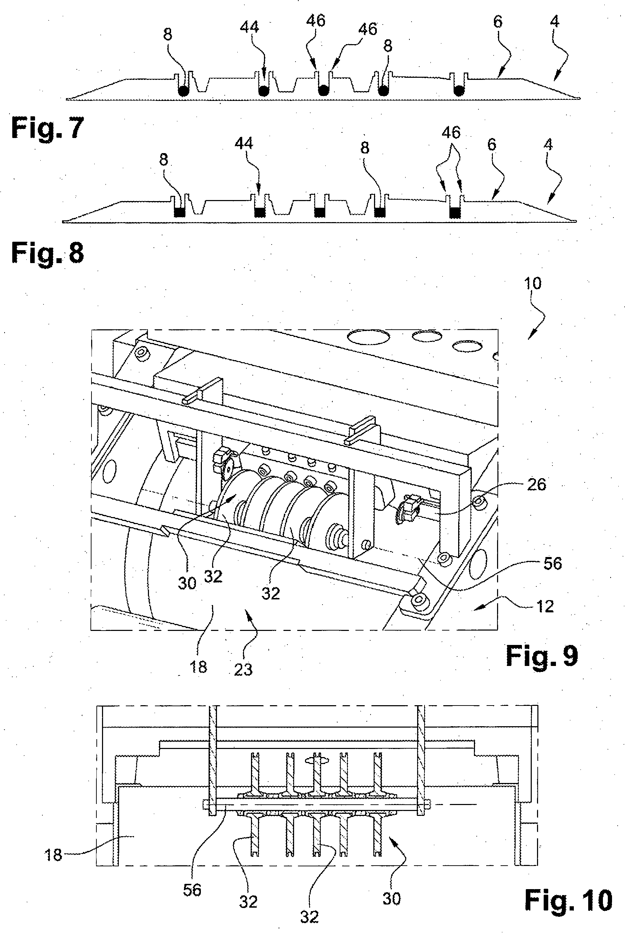

La bande 4 comprend en outre plusieurs joncs ou cordons 8 qui sont en l'espèce au nombre de cinq, ce nombre n'étant pas limitatif. Les joncs ont chacun une forme filaire, à section transversale circulaire comme c'est le cas aux figures 7, 11 et 15 ou carrée comme dans le cas des figures 8 et 12. Les joncs sont noyés dans le corps et s'étendent à distance des deux faces principales externe et interne de la bande. Chaque jonc forme un cercle coaxial au pneumatique et s'étend dans un plan perpendiculaire à l'axe 3. Les joncs peuvent avoir des profils transversaux identiques ou différents et peuvent être constitués de matériaux identiques ou différents. Les joncs sont réalisés individuellement, préalablement et séparément du corps 4, puis enroulés sur des bobines 9 (voir fig. 2) qui sont ensuite amenées sur la machine.

Le nez 10 de la machine d'extrusion comporte un bâti 12 comprenant deux montants verticaux 14 de forme plane disposés parallèlement l'un à l'autre et en regard et à distance l'un de l'autre. La plupart des organes du nez s'étendent dans l'espace aménagé entre les deux montants 14.

Le nez comprend un conduit 16, illustré notamment en partie droite de la figure 2 et servant pour l'amenée de la gomme destinée à être extrudée pour former le corps. Le nez 10 comprend un cylindre ou rouleau 18 disposé à l'embouchure aval du conduit 16 et présentant une face périphérique cylindrique 23 à section circulaire. Le nez comprend en outre un ensemble de pièces 20 formant une voûte 22 qui délimite avec la face 23 une chambre 25 de mise en pression du matériau à extruder, sur laquelle débouche le conduit 16. Les pièces 20 sont rigidement fixées au bâti 12, tandis que le rouleau 18 est monté mobile à rotation par rapport aux montants 14 autour de son axe horizontal 24 dans le sens antihoraire sur la figure 2. Le nez 10 comprend une lame profilée 26 s'étendant en aval de la chambre 25 et en regard de la face 23 du rouleau. En aval de la lame, le nez comprend un ensemble 30 à roulettes de pose 32 servant à introduire les joncs dans les sillons réalisés préalablement, ainsi qu'un ensemble de roulettage 34 servant à refermer les sillons sur les joncs ainsi disposés.

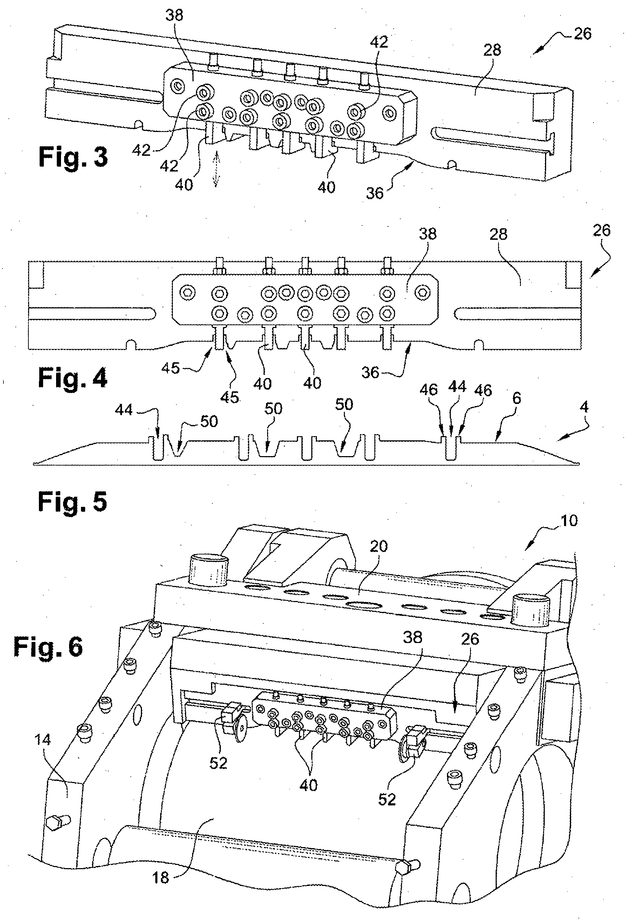

En références aux figures 3 et 4, la lame profilée 26 comprend un corps principal 28 de forme allongée de l'un à l'autre des montants 14 et rigidement fixé à ceux-ci. Le corps 28 a une face inférieure 36 présentant des cavités et des reliefs et destinée à donner sa forme à la face supérieure 6 de la bande de roulement par l'effet du passage de la gomme entre cette face 36 et la face 23 du rouleau. Ces deux éléments forment ainsi un orifice d'extrusion qui confère sa forme à la section de la bande 4 lors du passage du matériau.

La lame 26 comprend de plus un support 38 portant des socs de charrue 40 dont le nombre égale celui des joncs 8 que la bande est destinée à recevoir, cinq en l'espèce. Comme illustré notamment à la figure 2, chacun des socs 40 présente une forme générale en « L », la partie la plus longue du « L » s'étendant dans une direction proche de la direction verticale et proche de la direction radiale à l'axe 24, et étant enfilée dans un orifice dédié du support 38 dans lequel elle est montée mobile à coulissement suivant cette direction.

La lame 26 comprend pour chaque soc 40 des moyens de fixation rigides au corps 28, formés en l'espèce pour chaque soc par deux vis de fixation 42 traversant une partie du support et serrant le soc contre une face interne du support. Cet agencement permet de régler la position du soc par rapport au corps 28 suivant la direction précitée et donc de régler la profondeur du sillon 44 réalisé par le soc correspondant dans la bande 4, par exemple suivant le modèle de bandage pneumatique en cours de fabrication.

Les sillons 44 en eux-mêmes sont générés par la pénétration de la base ou petit côté du « L » de chaque soc 40 dans le matériau extrudé formant la bande de gomme. Les sillons sont générés par le fait que la base de chaque soc s'étend en saillie de la face 36 du corps 28, ou plus précisément de certaines zones de cette face, comme illustré à la figure 4. Le petit coté du « L » est orienté de sorte que le soc pénètre sous la partie profilée de la lame d'extrusion. Ce montage particulier permet de disposer la partie amont du soc dans une zone où la pression au sein de la bande n'est pas encore nulle ce qui permet de faciliter la pénétration du soc dans le matériau de la bande ainsi que la qualité du moulage.

La face 36 présente au droit de chaque soc une cavité 45 débordant au-delà du soc de chaque côté de ce dernier. Chacune de ces cavités permet de former de part et d'autre du sillon des bourrelets 46 respectifs en relief formant des surplus de gomme s'étendant en saillie de la partie principale de la face 6. Chaque sillon s'étend donc entre les deux bourrelets 46 associés qui lui sont contigus.

Le nombre de sillons étant en l'espèce égal à cinq, on compte dix bourrelets. Les sillons 44 sont destinés à recevoir les joncs, puis à être comblés comme on le verra plus loin. La bande 36 est également conformée pour former des sillons 50 en l'espèce au nombre de trois et destinés à persister de façon visible sur la bande de roulement et sur le pneumatique final, au contraire des sillons 44. Tous les sillons précités s'étendent parallèlement les uns aux autres et à la direction longitudinale de la bande 4.

Comme illustré à la figure 6, la lame 26 porte, en outre, en l'espèce, deux organes 52 formant des couteaux d'ébarbage du matériau pour délimiter les deux bords latéraux opposés de la bande. Ces organes sont disposés en regard l'un de l'autre, de part et d'autre du support 38.

La machine d'extrusion comprend des moyens 54 pour la réception de bobines 9 sur lesquelles sont enroulés les joncs respectifs. Ces moyens sont agencés de façon à permettre aux bobines de se dévider au fur et à mesure de la fabrication.

L'ensemble de roulettage 30 (voir les figures 6, 9 et 10) comprend des roues 32 qui sont en nombre égal, en l'espèce, à celui des joncs, à savoir au nombre de cinq. Les roues sont identiques entre elles et montées coaxialement les unes aux autres autour d'un axe horizontal 56. Elles s'étendent en regard de la lame 26 de sorte qu'un trajet 56 des joncs venant des bobines 9 passe entre l'ensemble 30 et la lame 26 avant leur insertion dans la bande de roulement. Au cours de ce trajet, les joncs viennent en appui contre le bord périphérique circonférentiel des roues 32 respectives. Chaque roue sert ainsi à guider le jonc correspondant jusqu'au fond du sillon pour l'y déposer, la roue pénétrant à cette fin à l'intérieur du sillon correspondant.

Les roues 32 sont montées sur un portique commun fixé au bâti et dont la position verticale est réglable afin de faire pénétrer les roues plus ou moins profondément dans les sillons, et donc d'insérer les joncs correspondants plus ou moins dans ces derniers. On ne prévoit pas en l'espèce de motorisation pour les roues 32, ces dernières étant entraînées en rotation par le défilement de la bande de roulement et les joncs insérés dans cette bande à la même vitesse périphérique que cette dernière. On peut prévoir une pièce de guidage intermédiaire telle qu'un tube traversé suivant son axe par les joncs pour leur guidage depuis les bobines 9 jusqu'à l'ensemble 30.

La figure 7 illustre la bande 4 avec ses sillons 44 ouverts au fond desquels les joncs 8 de matériau de remplissage ont été déposés. Il s'agit sur cette figure de joncs à section transversale circulaire d'un diamètre d'environ 4 millimètres. La figure 8 illustre de façon analogue le cas d'une bande 4 dans les sillons 44 de laquelle sont disposés des joncs 8 de matériau de remplissage et présentant une section transversale de forme parallélépipédique, par exemple carrée à 4 millimètres de côté.

En référence aux figures 2 et 11 à 14, l'ensemble de roulettage 34 comprend des organes de roulettage dont le nombre égale celui des joncs, à savoir cinq en l'espèce. L'un de ces organes 60 a été illustré à la figure 14. L'ensemble 34 comprend un support 62 rigidement fixé aux montants 14 et s'étendant de l'un à l'autre de ceux-ci. Chacun des organes 60 comprend un mât 64 de forme profilée, reçu dans un orifice femelle correspondant du support 62 en étant mobile à coulissement dans ce dernier suivant sa direction longitudinale qui est proche de la direction radiale à l'axe 24. L'ensemble 34 comprend pour chaque organe un élément de serrage 66 traversant la paroi du support 62 pour serrer le mât 64 contre une face interne du support et ainsi immobiliser l'organe 60 rigidement par rapport au support 62 dans la position de réglage choisie.

Chaque organe 60 comprend à une extrémité inférieure du mât un bras 68 portant deux roulettes dentées 70 montées rotatives sur le bras via des axes de rotation respectifs 72 coplanaires mais sécants et agencés de sorte que les roulettes ont une configuration ouverte vers l'amont par référence au sens de défilement de la bande. Les roulettes sont disposées de façon à venir en appui sur les bourrelets respectifs 46 associés au sillon considéré de façon à rabattre la matière formant ces reliefs dans le sillon par dessus le jonc 8 en vue de combler le sillon 44. Le jonc se trouve donc enfoui, recouvert et noyé dans la bande de roulement comme illustré aux figures 11 et 12 dans les deux cas correspondant aux figures 7 et 8 respectives.

Le procédé de fabrication de la bande de roulement est mis en oeuvre de la façon suivante au moyen de cette machine. Le matériau formant la gomme est amené dans le nez par le conduit 16 suivant la flèche 71, puis passe dans la chambre 25 où il est mis en pression avant d'être extrudé à travers l'orifice d'extrusion formé par la lame 26 et le rouleau 18. Au cours de cette opération qui met notamment en forme la face supérieure 6 de la bande, les socs 40 réalisent les sillons longitudinaux 44 dans la face 6, ainsi que les deux bourrelets 46 situés de part et d'autre de chaque sillon. Les socs se trouvent en partie arrière dans une zone de la machine où la pression est réduite par rapport à la pression régnant dans la chambre 25.

Les bobines 9 portant les joncs se dévident et les joncs guidés et soutenus par les roulettes 32 passent entre celles-ci et la lame 26 pour être insérées au fond des sillons respectifs 44 dans l'épaisseur de la bande de roulement. Les joncs se déroulent des bobines sous l'effet de l'entraînement de la bande qui entraîne également les roues 32. La bobine n'est freinée par aucun actionneur au cours de son mouvement.

La matière formant la bande est à ce stade encore chaude et molle. Lorsque la bande passe sous l'ensemble de roulettage 34, les roues 70 rabattent la matière des bourrelets 46 dans le sillon correspondant, noyant ainsi le jonc associé dans l'épaisseur de la bande de roulement. Le sillon se trouve ainsi bouché et comblé.

Ces opérations ont lieu successivement pour chaque section de bande considérée. Elles ont lieu en même temps pour l'ensemble de la bande, les bandes étant fabriquées en continu.

### Tests

Les propriétés d'adhésion des matériaux de remplissage et des compositions caoutchouteuses adjacentes sont caractérisées comme indiqué ci-après.

### A Tests d'adhésion matériau de remplissage / couche diénique

Des tests d'adhésion (tests de pelage) ont été conduits pour tester l'aptitude du matériau de remplissage à adhérer après cuisson à une couche d'élastomère diénique, plus précisément à une composition de caoutchouc usuelle pour bande de roulement de bandage pneumatique, à base de caoutchouc SBR et de silice (« Zeosil 165 » de Rhodia), comportant en outre les additifs usuels (soufre, accélérateur, ZnO, acide stéarique, antioxydant).

Les éprouvettes de pelage (du type pelage à 90°) ont été réalisées par empilage d'une couche mince du matériau à tester, d'une couche de 2mm de la composition usuelle pour bande de roulement crue, et enfin d'une nappe de renfort crue permettant de limiter la déformation de la couche précédente lors du pelage. Une amorce de rupture est insérée entre la couche de matériau à tester et la couche du type bande de roulement.

L'éprouvette après assemblage a été vulcanisée à 180°C sous pression pendant 15 minutes. Des bandes de 30 mm de largeur ont été découpées au massicot. Ces bandes sont alors collées du côté du matériau à tester sur un support métallique adapté au montage et l'autre partie est insérée dans les mors de traction. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à la valeur maximale de cette courbe.

### Essais

**Tableau 1**

| | *Composition N° (*% *massiques du total)* | ***C-1*** | ***C-2*** | ***C3*** | ***C4*** |
|---|---|---|---|---|---|
| *A* | *Acétate de cellulose Biograde C9550*^{**2*} | *100* | *90* | *80* | *70* |
| *B* | *SBS époxydé (eSBS) Epofriend AT501***¹* | *0* | *10* | *20* | *30* |
| *B*/*A* | | *0* | *0,11* | *0,25* | *0,42* |

| | | | | | |
|---|---|---|---|---|---|
| ^{*1}Commercialisé par la société Daicel ; ^{*2}Commercialisé par la société FKUR Kunstoff GmbH. | | | | | |

**Tableau 2**

| | *Composition N°* | ***C-1*** | ***C2*** | ***C3*** | ***C4*** |
|---|---|---|---|---|---|
| | *Maximum d'effort de pelage (N*/*mm)* | 0 | *1,2* | *3*,*8* | *15,1* |

Ces essais montrent l'intérêt de la présence de l'élastomère thermoplastique styrénique époxydé pour renforcer l'adhésion entre le matériau de remplissage et la paroi adjacente du matériau de la bande de roulement. Dès un rapport B/A de 0,1, cette adhésion est sensible. Préférentiellement, ce rapport est supérieur ou égal à 0,25.

On a toutefois constaté que la vitesse de dégradation du matériau de remplissage diminue sensiblement lorsque le rapport B/A dépasse 1, soit lorsque la composition du matériau de remplissage comporte majoritairement un élastomère thermoplastique insaturé. Le domaine de composition préférentiel est donc pour des rapports B/A entre 0,25 et 0,75.

Des bandages pneumatiques ont été réalisés comportant dans des cavités de leur bande de roulement des joncs cylindriques de matériau de remplissage correspondant à la composition C-4. Les cavités ont été formées dans la bande de roulement et les joncs cylindriques ont été introduits dans celles-ci à cru selon le procédé précédemment décrit. Les joncs étaient disposés de sorte de commencer à apparaître à mi-vie du bandage pneumatique après environ 4 mm d'usure.

Ces bandages pneumatiques ont roulés normalement jusqu'à apparition des ces inserts. Dès leur mise à l'air libre et au contact de la chaussée de roulage, les joncs de matériau de remplissage se sont rapidement dégradés, en quelques centaines de kilomètres seulement, libérant le volume des cavités et ainsi restaurant les performances du bandage pneumatique notamment sur sol mouillé.

## Revendications

1. Bandage pneumatique avec une bande de roulement comprenant un matériau de remplissage dégradable placé dans une cavité, **caractérisé en ce que** le matériau de remplissage comporte un mélange d'un matériau thermoplastique dégradable à base d'au moins un ester de cellulose choisi dans le groupe des acétates, des butyrates, des acétobutyrates, des propionates et des acétopropionates et d'un élastomère thermoplastique insaturé.

2. Bandage pneumatique selon la revendication 1, dans lequel, le matériau thermoplastique étant en proportion A et l'élastomère thermoplastique insaturé étant en proportion B, le rapport B/A varie de 0,1 à 1 ; A et B étant exprimés en masse.

3. Bandage pneumatique selon la revendication 2, dans lequel le rapport B/A varie de 0,25 à 0,75.

4. Bandage pneumatique selon l'une quelconque desa revendications 1 à 34, dans lequel le matériau thermoplastique dégradable est à base d'acétate de cellulose.

5. Bandage pneumatique selon la revendication 4, dans lequel le matériau thermoplastique dégradable est constitué d'un mélange d'acétate de cellulose et d'acétate de glycérol.

6. Bandage pneumatique selon l'une quelconque des revendications précédentes, dans lequel l'élastomère thermoplastique insaturé est un élastomère thermoplastique styrénique insaturé et est un copolymère comportant des blocs styrène et des blocs diène.

7. Bandage pneumatique selon la revendication 6, dans lequel l'élastomère thermoplastique styrénique insaturé est choisi dans le groupe constitué par les copolymères blocs styrène/ butadiène (SB), styrène/ isoprène (SI), styrène/ isoprène/ styrène (SIS), styrène/ butadiène/ butylène (SBB), styrène/ butadiène/ isoprène (SBI), styrène/ butadiène/ styrène (SBS), styrène/ butadiène/ butylène/ styrène (SBBS), styrène/ butadiène/ isoprène/ styrène (SBIS) et les mélanges de ces copolymères.

8. Bandage pneumatique selon la revendication 7, dans lequel l'élastomère thermoplastique styrénique insaturé est un copolymère SBS ou SIS, de préférence un copolymère SBS.

9. Bandage pneumatique selon l'une quelconque des revendications 6 à 8, dans lequel l'élastomère thermoplastique styrénique insaturé est porteur de groupes fonctionnels choisis parmi les groupes époxyde, carboxyle, anhydride et ester d'acide.

10. Bandage pneumatique selon la revendication 9, dans lequel l'élastomère thermoplastique styrénique insaturé est un élastomère époxydé.

11. Bandage pneumatique selon l'une quelconque des revendications précédentes, dans lequel la cavité est disposée radialement intérieurement relativement à une partie usable de la bande de roulement et forme un sillon circonférentiel.

12. Composition thermoplastique comportant un mélange d'un matériau thermoplastique dégradable à base de cellulose et d'un élastomère thermoplastique styrénique insaturé, dans laquelle le matériau thermoplastique dégradable est à base d'acétate de cellulose et l'élastomère thermoplastique styrénique insaturé est époxydé.

13. Utilisation d'une composition selon la revendication 12 comme matériau de remplissage d'une cavité de bande roulement d'un bandage pneumatique.

## Patentansprüche

1. Luftreifen mit einer Lauffläche, die einen in einem Hohlraum angeordneten abbaubaren Füllstoff umfasst, **dadurch gekennzeichnet, dass** der Füll-stoff eine Mischung aus einem abbaubaren thermoplastischen Material auf Basis mindestens eines Celluloseesters aus der Gruppe der Acetate, Butyrate, Acetobutyrate, Propionate und Acetopropionate und einem ungesättigten thermoplastischen Elastomer enthält.

2. Luftreifen nach Anspruch 1, wobei das thermoplastische Material in einem Anteil A vorliegt und das ungesättigte thermoplastische Elastomer in einem Anteil B vorliegt und das Verhältnis B/A von 0,1 bis 1 variiert; wobei A und B in Bezug auf das Gewicht ausgedrückt sind.

3. Luftreifen nach Anspruch 2, wobei das Verhältnis B/A von 0,25 bis 0,75 variiert.

4. Luftreifen nach einem der Ansprüche 1 bis 3, wobei das abbaubare thermoplastische Material auf Celluloseacetat basiert.

5. Luftreifen nach Anspruch 4, wobei das abbaubare thermoplastische Material aus einer Mischung von Celluloseacetat und Glycerinacetat besteht.

6. Luftreifen nach einem der vorhergehenden Ansprüche, wobei das ungesättigte thermoplastische Elastomer ein ungesättigtes thermoplastisches Styrolelastomer ist und ein Copolymer mit Styrolblöcken und Dienblöcken ist.

7. Luftreifen nach Anspruch 6, wobei das ungesättigte thermoplastische Styrolelastomer aus der Gruppe bestehend aus Styrol/Butadien(SB)-, Styrol/Isopren(SI)-, Styrol/Isopren/Styrol(SIS)-, Styrol/Butadien/Butylen(SBB)-, Styrol/Butadien/Isopren(SBI)-, Styrol/Butadien/Styrol(SBS)-, Styrol/Butadien/Butylen/Styrol(SBBS)-, Styrol/Butadien/Isopren/Styrol(SBIS)-Blockcopolymeren und Mischungen dieser Copolymere ausgewählt ist.

8. Luftreifen nach Anspruch 7, wobei es sich bei dem ungesättigten thermoplastischen Styrolelastomer um ein SBS- oder SIS-Copolymer, vorzugsweise ein SBS-Copolymer, handelt.

9. Luftreifen nach einem der Ansprüche 6 bis 8, wobei das ungesättigte thermoplastische Styrolelastomer funktionelle Gruppen, die aus Epoxid-, Carboxyl-, Säureanhydrid- und Säureestergruppen ausgewählt sind, trägt.

10. Luftreifen nach Anspruch 9, wobei es sich bei dem ungesättigten thermoplastischen Styrolelastomer um ein epoxidiertes Elastomer handelt.

11. Luftreifen nach einem der vorhergehenden Ansprüche, wobei der Hohlraum relativ zu einem verwendbaren Teil der Lauffläche radial innen angeordnet ist und eine Umfangsrille bildet.

12. Thermoplastische Zusammensetzung, enthaltend eine Mischung aus einem abbaubaren thermoplastischen Material auf Cellulosebasis und einem ungesättigten thermoplastischen Styrolelastomer, wobei das abbaubare thermoplastische Material auf Celluloseacetat basiert und das ungesättigte thermoplastische Styrolelastomer epoxidiert ist.

13. Verwendung einer Zusammensetzung nach Anspruch 12 als Füllstoff für einen Laufflächenhohlraum eines Luftreifens.

## Claims

1. Tyre with a tread comprising a degradable filler material placed in a cavity, **characterized in that** the filler material comprises a blend of a degradable cellulose-based thermoplastic based on at least one cellulose ester chosen from the group consisting of the acetates, butyrates, acetates butyrates, propionates and acetates propionates and of an unsaturated thermoplastic elastomer.

2. Tyre according to Claim 1, in which, the thermoplastic being in proportion A and the unsaturated thermoplastic elastomer being in proportion B, the B/A ratio varies from 0.1 to 1, A and B being expressed by weight.

3. Tyre according to Claim 2, in which the B/A ratio varies from 0.25 to 0.75.

4. Tyre according to anyone of Claims 1 to 3, in which the degradable thermoplastic is based on cellulose acetate.

5. Tyre according to Claim 4, in which the degradable thermoplastic is composed of a blend of cellulose acetate and glycerol acetate.

6. Tyre according to any one of the preceding claims, in which the unsaturated thermoplastic elastomer is an unsaturated thermoplastic styrene elastomer and is a copolymer comprising styrene blocks and diene blocks.

7. Tyre according to Claim 6, in which the unsaturated thermoplastic styrene elastomer is chosen from the group consisting of styrene/butadiene (SB), styrene/isoprene (SI), styrene/ isoprene/styrene (SIS), styrene/butadiene/butylene (SBB), styrene/butadiene/isoprene (SBI), styrene/butadiene/styrene (SBS), styrene/butadiene/butylene/styrene (SBBS) and styrene/butadiene/isoprene/styrene (SBS) block copolymers and the blends of these copolymers.

8. Tyre according to Claim 7, in which the unsaturated thermoplastic styrene elastomer is an SBS or SIS copolymer, preferably an SBS copolymer.

9. Tyre according to any one of Claims 6 to 8, in which the unsaturated thermoplastic styrene elastomer carries functional groups chosen from epoxide, carboxyl, acid anhydride and acid ester groups.

10. Tyre according to Claim 9, in which the unsaturated thermoplastic styrene elastomer is an epoxidized elastomer.

11. Tyre according to any one of the preceding claims, in which the cavity is positioned radially internally relative to a usable part of the tread and forms a circumferential furrow.

12. Thermoplastic composition comprising a blend of a degradable cellulose-based thermoplastic and an unsaturated thermoplastic styrene elastomer, in which the degradable thermoplastic is based on cellulose acetate and the unsaturated thermoplastic styrene elastomer is epoxidized.

13. Use of a composition according to Claim 12 as filler material for a tread cavity of a tyre.
